# EUROPÄISCHE PATENTANMELDUNG

(11) **EP 1 249 811 A2**
(43) Veröffentlichungstag der Anmeldung: **16.10.2002**
(21) Anmeldenummer: 02007952.1
(22) Anmeldetag: 09.04.2002
(51) Int. Cl.: G08G 1/16, G01C 3/08

(54) **Verfahren zur Anzeige des zeitlichen Abstandes eines Fahrzeuges zum vorausfahrenden Fahrzeug**

(30) Priorität: 11.04.2001 AT 5892001
(71) Anmelder: Sierzega, Robert, 4062 Thening (AT)
(72) Erfinder: Sierzega, Robert, 4062 Thening (AT)

(57) **Zusammenfassung**

Eine der häufigsten Unfallursachen im Straßenverkehr sind Auffahrunfälle, verursacht durch zu wenig Abstand beim Hintereinander fahren. Viele Verkehrsteilnehmer haben Schwierigkeiten ihren notwendigen Sicherheitsabstand richtig einzuschätzen. Aufgabe der Erfindung ist es, ein Verfahren zur Anzeige des zeitlichen Abstandes eines Fahrzeuges zum vorausfahrenden Fahrzeug zu schaffen, das dem Verkehrsteilnehmer seinen aktuellen zeitlichen Abstand zum vorausfahrenden Fahrzeug zeigt, um somit an Straßenstellen mit besonders hoher Unfallhäufigkeit zur Erhöhung der Verkehrssicherheit beizutragen. Dies wird dadurch erreicht, dass über oder neben der Straße eine Abstandsanzeige (1) mit integriertem FMCW-Radargerät (2), zuerst die Geschwindigkeit und Entfernung der ankommenden Fahrzeuge (3, 4) misst und daraus dann für jedes aktuell vor der Anzeige befindliche Fahrzeug (4) den zeitlichen Abstand zum vorausfahrenden Fahrzeug (3) nach dem erfindungsgemäßen Verfahren ermittelt und auf der Anzeige (1) anzeigt.

## Beschreibung

Die Erfindung betrifft ein Verfahren zur Anzeige des zeitlichen Abstandes eines Fahrzeuges zum vorausfahrenden Fahrzeug. Eine der häufigsten Unfallursachen im Straßenverkehr sind Auffahrunfälle, verursacht durch zu wenig Abstand beim Hintereinander fahren. Viele Verkehrsteilnehmer haben Schwierigkeiten ihren notwendigen Sicherheitsabstand richtig einzuschätzen. In den Fahrschulen lernt jeder Fahrschüler, dass er durch Merken eines markanten Punktes auf oder neben der Fahrbahn, den das vorausfahrende Fahrzeug in diesem Moment passiert, und durch Mitzählen bis zu seinem Eintreffen an diesem Punkt, er seinen eigenen zeitlichen Abstand zum vorausfahrenden Fahrzeug ermitteln kann und dass dieser Abstand mindestens zwei Sekunden betragen soll. In der Praxis wird diese Variante kaum verwendet beziehungsweise fühlen sich bei dieser Messung viele überfordert. Daher obliegt es den Straßenerhaltern und unterstützenden Organisationen, die Fahrzeuglenker über die Problematik zu informieren und auf den Verkehr einzuwirken, um somit die Anzahl der Unfälle die durch zu geringen Abstand hervorgerufen werden, zu reduzieren.

Bisher gibt es unterschiedliche Ansätze, um auf den Verkehrsteilnehmer einzuwirken. Einerseits werden rein passive Hinweise wie Bodenmarkierungen oder Hinweistafeln verwendet um auf die Problematik aufmerksam zu machen, andererseits wird seit vielen Jahren auch an aktiven elektronischen Einrichtungen gearbeitet, die zu mehr Disziplin im Straßenverkehr führen sollen. Bei den passiven Einrichtungen ist vielerorts in Europa eine Kombination aus Bodenmarkierungen und Hinweistafeln üblich, bei der schrittweise der Verkehrsteilnehmer mit Hinweistafeln auf die Abstandskontrolle vorbereitet wird und anschließend dem Fahrer durch Zählen der Bodenmarkierungen zwischen seinem und dem vorausfahrenden Fahrzeug ein Abstandstest angeboten und ermöglicht wird. Wenige Meter später wird auf weiteren Hinweistafeln der korrekte und der falsche Abstand bezogen auf die Anzahl der Bodenmarkierungen zwischen den Fahrzeugen grafisch dargestellt. Diese Methode des Abstandstests hat den Nachteil, dass der ermittelte Wert für die Abstandsbeurteilung, nämlich die Anzahl an Bodenmarkierungen zwischen den Fahrzeugen, unabhängig von der gefahrenen Geschwindigkeit ist und damit kein direkter Zusammenhang zwischen dem eigentlichen Problem, dem zeitlichen Abstand zwischen den Fahrzeugen und dem Testergebnis besteht, außer die Fahrzeuge fahren zufällig jene Geschwindigkeit, für die der Test ausgelegt ist.

Aus der US-PS 3,840,848 ist eine elektronische Anlage bekannt, mit der an einem Punkt die Zeitlücke zwischen den Fahrzeugen gemessen wird und einige Meter später eine Anzeige blinkt, falls der Mindestabstand unterschritten wird. Die Anlage hat den Nachteil, dass durch den räumlichen Abstand zwischen Messung und Anzeige die Zuordnung von Messwert zum Fahrzeug nicht eindeutig möglich ist. Es kann also passieren, dass die Anzeige auch bei Fahrzeugen blinkt, bei denen der Abstand in Ordnung ist, jedoch das nachfolgende Fahrzeug eventuell diese Warnung ausgelöst hat.

Aufgabe der vorliegenden Erfindung ist es daher, eine Verfahren zu schaffen, mit dem zuverlässig der zeitliche Abstand jedes Fahrzeuges zum vorausfahrenden Fahrzeug bestimmt wird, bei dem Messeinrichtung und Anzeige trotzdem räumlich eine Einheit bilden und bei dem jedem Fahrzeug, das sich der Anzeige als nächstes nähert auch tatsächlich der richtige Messwert gezeigt wird.

Ein Verfahren zum Messen des zeitlichen Abstandes zwischen zwei aufeinander folgenden Fahrzeugen wird in Offenlegungsschrift DE 1 616 308 A1 beschrieben. Dabei wird ein Radarstrahl in einem festen Winkel so über die Fahrbahn gesendet, dass an einem bestimmten Punkt eine Detektion der vorbeifahrenden Fahrzeuge möglich ist. Die Zeit zwischen den Detektionen wird gemessen und als Nettozeitlücke ausgegeben. Da die Messung an einem festgelegten Punkt erfolgt, könnte ein mit diesem Verfahren ermittelter Messwert nicht auf einer Anzeige dem Verkehrsteilnehmer gezeigt werden, da die Anzeige wieder räumlich von der Messstelle getrennt angebracht werden müsste und damit bei dichtem Verkehr keine eindeutige Zuordnung der Messwerte zu den jeweiligen Fahrzeugen mehr möglich ist.

Ein weiteres Verfahren mit dem unter anderem die Nettozeitlücke zwischen zwei aufeinander folgenden Fahrzeugen gemessen werden kann, wird in der Offenlegungsschrift DE 198 23 135 A1 beschrieben. In diesem Verfahren wird ein gepulstes FMCW-Radargerät verwendet, das von einer Ampel herab kurze Radarpulse aussendet. Mittels Laufzeitmessung wird die Entfernung der Fahrzeuge im Erfassungsbereich bestimmt. Da jedoch die Ausbreitung der Radarstrahlen mit Lichtgeschwindigkeit erfolgt, sind Entfernungen bis 100 Meter kaum oder nur mit schlechter Qualität messbar, weswegen die ermittelten Nettozeitlücken zwar dem dieser Schrift zugrunde gelegten Zweck, nämlich der verkehrsabhängigen Steuerung von Lichtsignalanlagen genügen, jedoch den Qualitätsanforderungen einer direkten Messwertanzeige als Rückmeldung für den Verkehrsteilnehmer nicht entsprechen. Darüber hinaus werden in diesem Verfahren fortlaufend alle Nettozeitlücken aller Fahrzeuge im Erfassungsbereich gemessen und eine eindeutige Zuordnung eines einzelnen Messwertes für jenes Fahrzeug, das sich gerade als nächstes vor der Messeinrichtung befindet ist deswegen nicht möglich, da im unmittelbaren Nahbereich mit Laufzeitmessung nicht festgestellt werden kann, welches Fahrzeug sich gerade als nächstes nähert.

Bei der vorliegenden Erfindung wird mittels eines FMCW-Radarsensors im Ein- oder Mehr-Rampenverfahren oder im FSK-Verfahren das nächstankommende Fahrzeug auf einer Straße aus einer Spektralanalyse mit einer Fast-Fourier-Transformation (FFT) über diejenige Spektrallinie mit der größten Amplitude detektiert und in bekannter Weise davon Entfernung und Geschwindigkeit ermittelt. Das erste Fahrzeug vor der Anlage liefert das stärkste Signal für die Radarauswertung und wird bis zum Verlassen des Erfassungsbereichs und damit bis zum Passieren der Anlage verfolgt. Danach wird vom Radargerät das nachfolgende Fahrzeug erfasst und die Geschwindigkeit sowie die Entfernung von der Abstandsanzeige gemessen. Damit kann aus diesen Messwerten jene Zeit berechnet werden, die das Fahrzeug bis zum Passieren der Abstandsanzeige bei der gemessenen Geschwindigkeit benötigt. Da jener Zeitpunkt, zu dem das vorausfahrenden Fahrzeug die Abstandsanzeige passiert hat, bekannt ist, kann der zeitliche Abstand zwischen den beiden Fahrzeugen errechnet und auf der Großanzeige angezeigt werden. Das nachfolgende Fahrzeug wird wieder bis zum Passieren der Abstandsanzeige verfolgt, eventuell bei einer Geschwindigkeitsänderung der Abstandswert aktualisiert. Im Gegensatz zu Anlagen, bei denen an einem Punkt der zeitliche Abstand zwischen den Fahrzeugen gemessen wird und räumlich getrennt die Anzeige dies aufzeigt, wird also der Abstand immer nur jenem Verkehrsteilnehmer gezeigt, für den der dargestellte Messwert zutrifft und kann somit auch gelöscht werden, sobald das Fahrzeug die Abstandsanzeige passiert hat.

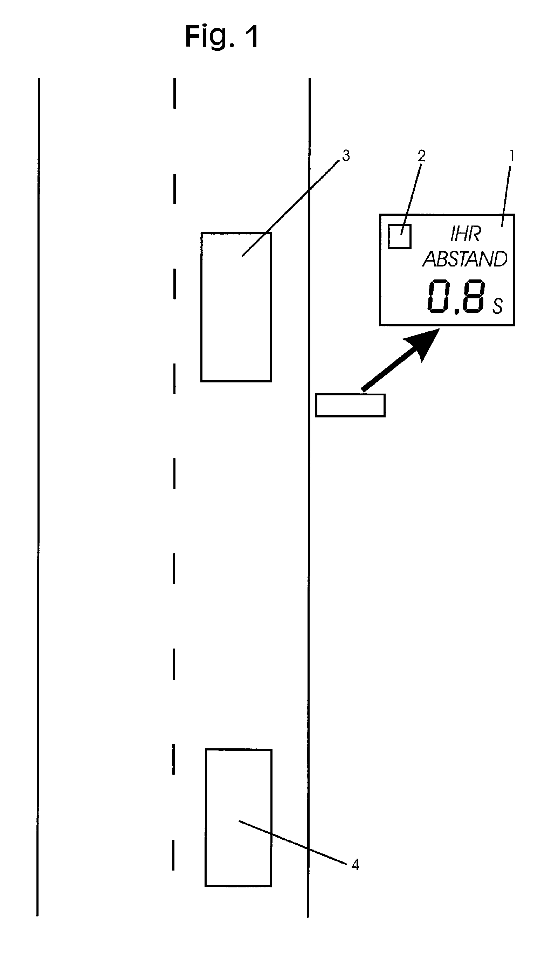

Fig.1 zeigt die Abstandsanzeige 1 mit integriertem FMCW-Radargerät 2, ein vorausfahrendes Fahrzeug 3, das soeben die Abstandsanzeige passiert hat, sowie ein nachfolgendes Fahrzeug 4. Der Erfassungsbereich der Radareinheit ist auf den ankommenden Verkehr ausgerichtet, so dass sich zu dem dargestellten Zeitpunkt nur das Fahrzeug 4 sich im Erfassungsbereich befindet. Das FMCW-Radargerät 2 ermittelt die Geschwindigkeit und die Entfernung von Fahrzeug 4. Vorausgesetzt Fahrzeug 3 hat unmittelbar vor der ersten Entfernungs- und Geschwindigkeitsmessung von Fahrzeug 4 den Erfassungsbereich verlassen und die Entfernung beim Verlassen des Erfassungsbereichs ist bekannt, so kann aus der Differenz der Entfernungen der beiden Fahrzeuge 3 und 4 und aus der Geschwindigkeit von Fahrzeug 4 der zeitliche Abstand zwischen den beiden Fahrzeugen 3 und 4 berechnet und sofort angezeigt werden. Sollte nach dem Verlassen des Erfassungsbereichs von Fahrzeug 3 Fahrzeug 4 nicht sofort im Erfassungsbereich von FMCW-Radargerät 2 sein, so wird der Zeitpunkt, zu dem Fahrzeug 2 den Erfassungsbereich verlassen hat, gespeichert, damit nach der ersten Messung von Fahrzeug 4 die Zeitdifferenz seit dem Fahrzeug 3 den Erfassungsbereich verlassen hat mitberücksichtigt, also zur Zeit die Fahrzeug 4 bei aktueller Geschwindigkeit zwischen der aktuellen Entfernung und der letzten von Fahrzeug 3 gemessenen Entfernung addiert werden kann.

## Patentansprüche

1. Verfahren zur Anzeige des zeitlichen Abstandes eines Fahrzeuges zum vorausfahrenden Fahrzeug, **dadurch gekennzeichnet, dass** zuerst mittels eines FMCW-Radarsensors das nächstankommende Fahrzeug auf einer Straße detektiert wird und in bekannter Weise davon Entfernung und Geschwindigkeit ermittelt werden,
dass daraufhin dieses nächstankommende Fahrzeug als Zielobjekt durch kontinuierliche Auswertung der Radarsignale bis zu einer minimal erfassbaren Entfernung vor der Messanlage verfolgt und der Zeitpunkt, in dem in der Spektralanalyse das Zielobjekt nicht mehr detektiert werden kann und somit das Zielobjekt den Erfassungsbereich verlassen hat, registriert und gespeichert wird,
dass dann die kontinuierliche Auswertung der Signale des FMCW-Radarsensors solange fortgesetzt wird, bis ein nachfolgendes Fahrzeug detektiert wird und davon wieder in bekannter Weise Entfernung und Geschwindigkeit ermittelt werden,
dass dann aus der Differenz der aktuellen Entfernung des nachfolgendes Fahrzeuges und der minimal erfassbaren Entfernung, sowie aus der aktuellen Geschwindigkeit und dem Zeitpunkt, in dem das vorausfahrende Fahrzeug den Erfassungsbereich verlassen hat, der zeitliche Abstand des nächstankommenden Fahrzeuges zum vorausfahrenden Fahrzeug berechnet wird und
dass dann der berechnete aktuelle zeitliche Abstand auf einer Anzeige dem Fahrer des nachfolgenden Fahrzeuges unmittelbar angezeigt wird.

2. Verfahren nach Anspruch 1, **dadurch gekennzeichnet, dass** neben dem zeitlichen Abstand eines Fahrzeuges zum vorausfahrenden Fahrzeug wahlweise auch seine Geschwindigkeit und die Entfernung zum vorausfahrenden Fahrzeug auf Basis einer Längeneinheit angezeigt wird.

3. Verfahren nach den Ansprüchen 1 oder 2, **dadurch gekennzeichnet, dass** die ermittelten Messwerte, wie Geschwindigkeit, Fahrzeuglänge und zeitlicher Abstand von jedem Fahrzeug mit Datum und Uhrzeit für verkehrsstatistische Zwecke gespeichert wird.
